(19) Europäisches Patentamt
European Patent Office
Office européen des brevets

(11) EP 1 199 556 B1

(12) EUROPÄISCHE PATENTSCHRIFT

(45) Veröffentlichungstag und Bekanntmachung des Hinweises auf die Patenterteilung:
**06.05.2004 Patentblatt 2004/19**

(51) Int Cl.$^7$: **G01N 21/77**, G01N 21/64

(21) Anmeldenummer: **01203803.0**

(22) Anmeldetag: **04.10.2001**

(54) **Optischer Sensor zur Bestimmung eines Analyten und Verfahren zu dessen Herstellung**

Optical sensor for measuring an analyte and method of manufacturing the same

Détecteur optique pour mesurer un analyte et sa méthode de fabrication

(84) Benannte Vertragsstaaten:
**AT BE CH CY DE DK ES FI FR GB GR IE IT LI LU MC NL PT SE TR**

(30) Priorität: **16.10.2000 DE 10051220**

(43) Veröffentlichungstag der Anmeldung:
**24.04.2002 Patentblatt 2002/17**

(73) Patentinhaber: **Mettler-Toledo GmbH
8606 Greifensee (CH)**

(72) Erfinder:
- **Trapp, Thilo
8910 Affoltern am Albis (CH)**
- **Anders, Klaus-Dieter
5436 Würenlos (CH)**
- **Huber, Christian
93326 Abensberg (DE)**
- **Klimant, Ingo
93098 Mintraching (DE)**

(56) Entgegenhaltungen:
**WO-A-93/18391**
**US-A- 5 030 420**
**US-A- 5 152 287**
**US-A- 5 900 215**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 199 556 B1

Printed by Jouve, 75001 PARIS (FR)

## Beschreibung

### Technisches Gebiet

Die Erfindung betrifft einen optischen Sensor gemäss dem Oberbegriff des Anspruches 1, ein Verfahren zur Herstellung des Sensors, ein Verfahren zur Bestimmung eines Analyten in einem Messmedium sowie eine Verwendung des optischen Sensors.

### Stand der Technik

Optische Sensoren werden in den verschiedensten Anwendungsgebieten eingesetzt, um bestimmte Analyten in einem Messmedium nachzuweisen und insbesondere deren Konzentration zu messen. Beispiele für solche Analyten sind Sauerstoff, Kohlendioxid, Schwefeldioxid sowie andere chemische Substanzen, die in einem flüssigen oder gasförmigen Messmedium, beispielsweise in einer wässrigen Lösung, Luft oder dergleichen, enthalten sind.

Gattungsgemässe optische Sensoren sind in den Druckschriften WO-93/18391 und US-5152287 sowie in Martina Trinkel, Optical Sensors for Trace Oxygen Analysis, Dissertationsschrift, Naturwissenschaftliche Fakultät der Karl-Franzens-Universität Graz, Juli 1998 (nachfolgend "Dissertation TRINKEL™) beschrieben. Diese umfassen eine im wesentlichen aus einem Fluoropolymer gebildete Sensormatrix, die einen Lumineszenzindikator enthält. Der Lumineszenzindikator ist dazu befähigt, mittels Licht angeregt zu werden und daraufhin zumindest einen Teil der aufgenommenen Lichtenergie in Form einer Lumineszenzstrahlung wieder abzugeben, wobei eine oder mehrere messbare Eigenschaften wie die Intensität oder die zeitliche Abklingzeit der Lumineszenzstrahlung unter Einwirkung des zu bestimmenden Analyten veränderlich sind. Aufgrund einer Permeabilität der Sensormatrix für den zu bestimmenden Analyten bewirkt eine hohe Konzentration des Analyten im Messmedium eine entsprechend hohe Konzentration des Analyten in der Sensormatrix und führt dadurch zu einem entsprechend starken Grad der Veränderung der Lumineszenzeigenschaften, was beispielsweise durch die bekannte Stern-Volmer-Gleichung beschreibbar ist. Im Ergebnis erlaubt eine Messung der Lumineszenzeigeschaften einen Rückschluss auf die Konzentration des Analyten im Messmedium.

Wesentliche Anforderungen, die an die Sensormatrix gestellt werden, umfassen eine hohe Transparenz sowohl für das zur Anregung des Lumineszenzindikators verwendete Licht als auch für die vom Lumineszenzindikator ausgesandte Strahlung, eine gute Permeabilität für den Analyten sowie eine gute mechanische und chemische Beständigkeit.

Die in der WO-93/18391 beschriebenen optischen Sensoren, welche insbesondere zum Nachweis von Sauerstoff oder Kohlendioxid in einem fluiden Messmedium vorgesehen sind, weisen eine Sensormatrix auf, die aus einem gehärteten, teilweise fluorierten Polyurethan gebildet ist und einen an sich bekannten Lumineszenzindikator enthält. Die US-5152287 beschreibt eine Sensormatrix, welche aus einem teilweise fluorierten Polyakrylat gebildet ist und ebenfalls einen an sich bekannten Lumineszenzindikator enthält. Bei der Herstellung dieser bekannten Sensormatrizes wird der jeweils vorgesehene Lumineszenzindikator, vorzugsweise ein Übergangsmetallkomplex, mit den für die Bildung des Fluoropolymers erforderlichen Ausgangsmaterialien vermischt, wobei es sich in der Regel um eine Vorläufersubstanz und eine Härtersubstanz handelt. Anschliessend wird durch thermische oder lichtinduzierte Vernetzung das Fluoropolymer mit dem darin eingeschlossenen Lumineszenzindikator gebildet.

Ein Nachteil dieser bekannten Sensoren besteht darin, dass die chemische und/oder mechanische Beständigkeit der als Matrixmaterial verwendeten Fluoropolymere für gewisse Anwendungen nicht ausreichend ist. Der Einsatz eines chemisch und/oder mechanisch beständigeren Fluoropolymers wie Polytetrafluoroethylen oder eines der bekannten Derivate hiervon ist jedoch dadurch erschwert oder gar verunmöglicht, dass die bekannten Lumineszenzindikatoren in dem beständigeren Fluoropolymer gar nicht oder nur unter erheblichen Schwierigkeiten einbringbar sind. Insbesondere sind die bekannten Lumineszenzindikatoren in hochgradig fluorierten oder gar perfluorierten Fluoropolymeren nur schlecht oder gar nicht lösbar, so dass eine homogene Verteilung der Lumineszenzindikator-Moleküle in der Sensormatrix erschwert oder sogar unmöglich ist. Besonders nachteilig ist überdies eine auftretende Aggregation der Lumineszenzindikator-Moleküle, welche innerhalb einer Zeitspanne von Tagen bis Wochen zu einer merklichen Veränderung der optischen Sensoreigenschaften führt. Ausserdem wird oftmals ein höchst unerwünschter Austritt des Lumineszenzindikators aus der Sensormatrix beobachtet. In der Dissertation TRINKEL sind Prototypen optischer Sensoren für die Spurengasanalyse beschrieben, deren Sensormatrix aus einem aus Tetrafluoroethylen und 2,2-Bistrifluoromethyl-4,5-difluoro-1,3-dioxol gebildeten Copolymer besteht. Derartige Fluoropolymere sind beispielsweise unter den Handelsbezeichnungen Teflon® AF, insbesondere Teflon® AF 1600 oder Teflon® AF 2400 bekannt und erhältlich. Als Lumineszenzindikatoren wurden dort unter anderem verschiedene bekannte Zinn-, Palladium- und Platin-Porphyrinkomplexe eingesetzt. Wie ausführlich in der Dissertation TRINKEL beschrieben (vgl. insbesondere Kap. 4.4.6. "Storage Stability") fand bei den dort untersuchten Sensor-Prototypen ein unerwünschter Austritt des Lumineszenzindikators aus der Sensormatrix statt. Dementsprechend mussten aufgrund der ungenügenden Haltbarkeit die dort untersuchten optischen Sensoren als für eine Prozessüberwachung ungeeignet verworfen werden (vgl. letzter Satz im Kap. 4.5. "Conclusion").

Die bisher angewendeten Verfahren zur Herstellung gattungsgemässer Sensoren beruhen darauf, dass der Lumineszenzindikator bereits vor der Bildung des Fluoropolymers einzubringen ist. Nachteilig ist dabei, dass im Zuge des Polymerisationsvorganges einerseits die bereits erwähnte inhomogene Verteilung des Lumineszenzindikators eintreten kann und andererseits sogar eine Zerstörung des Lumineszenzindikators durch die an der Polymerisation beteiligten hochreaktiven Radikale stattfinden kann. Darüber hinaus sind die bekannten Herstellungsverfahren aufwendig, erfordern die Handhabung toxischer Substanzen und sind zudem nur schlecht reproduzierbar. Zwar wurde in der Dissertation TRINKEL versucht, diese Probleme durch Verwendung des in hochfluorierten oder perfluorierten Lösemitteln lösbaren Teflon® AF als Matrixmaterial zu umgehen. Wie bereits oben erwähnt, führte dieser Ansatz allerdings nicht zum Erfolg, da die gebildeten Sensormatrizes nicht die gewünschten Eigenschaften aufwiesen und insbesondere eine Aggregation und/oder ein Austritt des Lumineszenzindikators aus der Sensormatrix stattfand.

## Darstellung der Erfindung

Aufgabe der Erfindung ist es, einen verbesserten optischen Sensor bereitzustellen und ein Verfahren zur Herstellung des Sensors anzugeben, welche insbesondere die genannten Nachteile nicht aufweisen. Gelöst wird diese Aufgabe durch den im Anspruch 1 definierten optischen Sensor und das im Anspruch 15 definierte Herstellungsverfahren.

Weitere Aufgaben der Erfindung bestehen darin, ein Verfahren zur Bestimmung eines Analyten in einem Messmedium sowie eine Verwendung des erfindungsgemässen optischen Sensors anzugeben. Diese Aufgaben werden durch das im Anspruch 17 definierte Verfahren beziehungsweise durch die im Anspruch 18 definierte Verwendung gelöst.

Dadurch, dass der Lumineszenzindikator einen Metallkomplex von Ruthenium, Rhenium, Rhodium oder Iridium und mindestens einem mindestens teilweise fluorierten Liganden enthält, ergibt sich im Vergleich zu den bekannten Lumineszenzindikatoren eine wesentlich bessere Einbringbarkeit des Lumineszenzindikators in Fluoropolymere jeglicher Art. Dies erlaubt eine dem jeweiligen Anwendungsbereich des Sensors angepasste Wahl des Fluoropolymers, wobei insbesondere auch hochgradig fluorierte oder sogar perfluorierte Fluoropolymere verwendbar sind. Die erfindungsgemäss vorgesehenen Metallkomplexe mit mindestens teilweise fluorierten Liganden zeichnen sich durch eine gute Lösbarkeit in Fluoropolymeren aus und gewährleisten dadurch eine thermodynamisch stabile, homogene Verteilung des Lumineszenzindikators in der Sensormatrix. Damit wird eine gute Konstanz und Haltbarkeit des optischen Sensors erreicht.

Beim erfindungsgemässen Verfahren zur Herstellung des Sensors löst man eine erste Menge des Lumineszenzindikators und eine zweite Menge des Fluoropolymers in einem Lösemittel und bildet danach durch Abdampfen des Lösemittels die Sensormatrix. Im Unterschied zu den bekannten Verfahren kann demnach von dem bereits auf Produzentenseite hergestellten Fluoropolymer ausgegangen werden. Dadurch, dass bei der Sensorherstellung keine Polymerisationsprozesse durchzuführen sind, ergibt sich ein einfach durchführbares und gut reproduzierbares Verfahren, welches überdies keine Handhabung toxischer Substanzen erfordert. Darüber hinaus wird das Problem der Zersetzung des Lumineszenzfarbstoffes durch die an Polymerisationsvorgängen beteiligten Radikale und anderen hochreaktiven Spezies vermieden.

Vorteilhafte Ausgestaltungen und Ausführungsformen des Erfindungsgegenstandes sind in den abhängigen Ansprüchen beschrieben.

Gemäss Anspruch 2 ist die Sensormatrix aus einem bei Raumtemperatur im wesentlichen ausschliesslich in hochfluorierten oder perfluorierten Lösemitteln lösbaren Fluoropolymer, vorzugsweise aus einem Polytetrafluoroethylen-Derivat, gebildet. Durch die ausschliessliche Lösbarkeit in den besagten Lösemitteln ist gewährleistet, dass beim Kontakt der Sensormatrix mit einem anderen, insbesondere im Messmedium vorliegenden Lösemittel kein unerwünschtes Lösen oder Quellen der Sensormatrix stattfindet. Besonders bevorzugt ist die im Anspruch 3 definierte Ausgestaltung, wonach das Fluoropolymer ein aus Tetrafluoroethylen und 2,2-Bistrifluoromethyl-4,5-difluoro-1,3-dioxol gebildetes Copolymer ist. Derartige Fluoropolymere sind beispielsweise unter den Handelsbezeichnungen Teflon® AF, insbesondere Teflon® AF 1600 oder Teflon® AF 2400, bekannt und zeichnen sich durch eine gute Lösbarkeit in ausgewählten hochfluorierten oder perfluorierten Lösemitteln aus. Dank der hohen Transparenz dieser Fluoropolymere wird die optische Anregung des Lumineszenzindikators und der Nachweis der Lumineszenzstrahlung begünstigt, und durch die hohe Gaspermeabilität wird zudem eine schnelle Ansprechzeit auf Konzentrationsveränderungen des Analyten im Messmedium gewährleistet.

Vorteilhafte Ausgestaltungen des Metallkomplexes sind in den Ansprüchen 4 bis 10 definiert. Als Liganden des Metallkomplexes sind vornehmlich zweizähnige Chelatliganden vorgesehen, wobei die Gruppe der Polypyridine, insbesondere die Gruppe der substituierten 1,10-Phenanthrolin-Derivate und der substituierten Bipyridine, welche jeweils mindestens einen mindestens teilweise fluorierten Substituenten enthalten, bevorzugt ist. Insbesondere kann

als Ligand ein 4,7-Dipentafluorobenzyloxy-1,10-phenanthrolin vorgesehen sein. Alternativ kann als Ligand ein 5-Pentafluorobenzamid-1,10-phenanthrolin, ein 4,7-Di-(3,3,4,4,5,5,5-heptafluoropentyl)-1,10-phenanthrolin, ein N,N'-Di-(2,2,3,3,4,4,4-heptafluorobutyl)-1,10-phenanthrolin-4,7-diamid oder ein 4,7-Di-2,2,3,3,4,4,4-heptafluorobutylamino-1,10-phenanthrolin vorgesehen sein. Alternativ kann als Ligand ein 4,4'-Di-(3,3,4,4,5,5,5-heptafluoropentyl)-2,2'-bipyridin oder ein N,N'-Di-(2,2,3,3,4,4,4-heptafluorobutyl)-4,4'bipyridin-2,2'-diamid vorgesehen sein. Der Metallkomplex kann entweder eine Mehrzahl identischer Liganden oder eine Mehrzahl unterschiedlicher Liganden enthalten. Vorzugsweise ist der Metallkomplex ein Ruthenium(II)-tris-(4,7-dipentafluorobenzyloxy-1,10-phenanthrolin) oder ein Ruthenium(II)-bis-(4,7-diphenylphenanthrolin)-(4,7-dipentafluorobenzyloxy-1,10-phenanthrolin) oder ein Ruthenium (II)-bis-(4,7-dipentafluorobenzyloxy-1,10-phenanthrolin)-(4,7-diphenylphenanthrolin).

Gemäss Anspruch 11 enthält der Lumineszenzindikator ein mindestens teilweise fluoriertes Gegenion, wodurch sich eine verbesserte Lösbarkeit des Lumineszenzindikators in dem die Sensormatrix bildenden Fluoropolymer ergibt. Besonders vorteilhaft ist überdies die im Anspruch 12 definierte Ausführungsform, wonach das Gegenion dazu geeignet ist, eine sterische Behinderung herbeizuführen. Beispiele für solche Anionen sind das Tetrakis-(4-chlorophenyl)-borat, das Tetrakis-[3,5-bis-(trifluormethyl)-phenyl]-borat und das Tetrakis-[3,5-bis-(1,1,1,3,3,3-hexafluor-2-methoxy-2propyl)-phenyl]-borat, welche dank ihrer Sperrigkeit eine unerwünschte Aggregation des Lumineszenzindikators in der Sensormatrix zusätzlich erschweren bzw. verhindern.

Gemäss Anspruch 13 ist die Sensormatrix folienartig ausgebildet, was einen nur kurzen Eindringweg des Analyten in die Sensormatrix erfordert und dadurch eine schnelle Ansprechzeit des optischen Sensors ermöglicht.

Bei der Ausgestaltung nach Anspruch 14 ist die Sensormatrix mit einer Schutzschicht versehen, wobei diese im wesentlichen aus demselben Fluoropolymer wie die Sensormatrix besteht und im wesentlichen keinen Lumineszenzindikator enthält. Damit lässt sich ein direkter Kontakt zwischen randständigen Bereichen der Sensormatrix und dem Messmedium vermeiden, um eine mechanische Beschädigung der Sensormatrix durch abrasive Partikel des Messmediums und/oder eine Reaktion des Lumineszenzindikators mit im Messmedium befindlichen Substanzen zu verhindern.

Bei der bevorzugten Ausführungsform des Herstellungsverfahrens nach Anspruch 16 verwendet man ein hochfluoriertes oder perfluoriertes Lösemittel, beispielsweise Octafluorotoluol. Dieses zeichnet sich durch eine gute Lösefähigkeit sowohl bezüglich der zur Bildung der Sensormatrix verwendeten Fluoropolymere wie auch bezüglich der als Lumineszenzindikatoren verwendeten Metallkomplexe mit fluorierten Liganden aus.

<u>Kurze Beschreibung der Zeichnung</u>

Ausführungsbeispiele der Erfindung werden nachfolgend anhand der Zeichnungen näher beschrieben, dabei zeigen:

- Figur 1 einen Teil eines optischen Sensors in schematischer Darstellung, im Längsschnitt;
- Figur 2 einen optischen Sensor, im Längsschnitt;
- Figur 3 den zeitlichen Verlauf der optischen Phasenverschiebung einer Sensor-matrix bei wiederholter stufenartiger Veränderung des Sauerstoffgehaltes in einem gasförmigen Messmedium;
- Figur 4 den zeitlichen Verlauf der optischen Phasenverschiebung einer weiteren Sensormatrix bei wiederholter stufenartiger Veränderung des Sauerstoffgehaltes im gasförmigen Messmedium.

<u>Wege zur Ausführung der Erfindung</u>

<u>1. Grundlagen</u>

Der in der Figur 1 dargestellte Teil eines optischen Sensors weist eine aus einem Fluoropolymer gebildete Sensormatrix 2 auf, die einen Lumineszenzindikator 4 enthält. Der Lumineszenzindikator 4 ist dazu befähigt, durch eingestrahltes Licht 6 angeregt zu werden und einen Teil der aufgenommenen Lichtenergie in Form einer Lumineszenzstrahlung 8 wieder abzugeben. Zweckmässigerweise ist die Sensormatrix 2 von einer Schutzschicht 10 umgeben, welche im wesentlichen aus demselben Fluoropolymer wie die Sensormatrix 2 besteht, jedoch im wesentlichen frei von Lumineszenzindikator 4 ist. Durch die Schutzschicht 10 wird ein direkter Kontakt zwischen der Sensormatrix 2 und einem schematisch dargestellten Messmedium 12 verhindert.

Die Figur 2 zeigt einen optischen Sensor mit einem rohrförmigen Gehäuse 14, welches einen Glasstab 16 mit polierter Endfläche 18 enthält, wobei letztere zusammen mit einer Stirnfläche 20 des Gehäuses 14 eine Auflagefläche für eine folienförmig ausgebildete Sensormatrix 22 bildet. Auf der von der Auflagefläche abgewandten Seite der Sensormatrix 22 ist eine als Schutzschicht wirkende Deckfolie 24 angeordnet. Die Deckfolie 24 und die Sensormatrix 22 sind mittels einer Überwurfhülse 26 gegen die Auflagefläche andrückbar. Der Glasstab 16 wirkt als Mittel zur Zuführung von eingestrahltem Licht 6 wie auch als Mittel zur Wegführung von Lumineszenzstrahlung 8. An dem von der

Sensormatrix 22 abgewandten Ende des Glasstabes 16 ist ein Lichtwellenleiter 28, beispielsweise ein Faserbündel, vorgesehen, mittels welchem eine optische Verbindung zu einer nicht dargestellten Lichtquelle sowie zu einem nicht dargestellten Lichtdetektor herstellbar ist.

Zur Bestimmung eines im Messmedium befindlichen Analyten wird in an sich bekannter Weise eine Änderung einer optischen Eigenschaft des Lumineszenzindikators ermittelt, welche durch eine Wechselwirkung zwischen einem in die Sensormatrix eingedrungenen Anteil des Analyten und dem Lumineszenzindikator hervorgerufen wird. Es ist bekannt, dass sowohl die Lumineszenzintensität als auch die Lumineszenzabklingzeit bestimmter Lumineszenzindikatoren infolge einer dynamischen Lumineszenzlöschung (Quenching) durch bestimmte Analyten wie beispielsweise Sauerstoff vermindert wird. Dies kommt in der Stern-Volmer-Gleichung zum Ausdruck:

$$\frac{F_o}{F} = \frac{\tau_o}{\tau} = 1 + k \cdot \tau_o \cdot [Q] = 1 + K_{SV} \cdot [Q] \qquad (1)$$

Hierin bedeuten $F_o$ und F die relativen Lumineszenzintensitäten in Abwesenheit bzw. in Gegenwart des Analyten, [Q] die Konzentration des Analyten, k die bimolekulare Ratenkonstante für das Löschen, $\tau_o$ und $\tau$ die Abklingzeiten der Lumineszenzstrahlung in Abwesenheit bzw. in Gegenwart des Analyten und $K_{SV}$ die Stern-Volmer-Löschkonstante. Somit kann aus der relativen Lumineszenzintensität $F_o/F$ beziehungsweise dem Verhältnis der Abklingzeiten $\tau_o/\tau$ auf die Analytkonzentration in der Sensormatrix geschlossen werden, welche ihrerseits in einem weiten Messbereich proportional zur Analytkonzentration im Messmedium ist. Es ist allerdings bekannt, dass in gewissen Fällen das beobachtete Lumineszenzverhalten von den Voraussagen der Stern-Volmer-Gleichung abweicht, wobei oftmals eine abgewandelte Beschreibung mit einer Überlagerung von zwei oder mehr Stem-Volmer-Gleichungen mit unterschiedlichen Löschkonstanten anwendbar ist. Zweckmässigerweise wird deshalb in an sich bekannter Weise mindestens vor der ersten Inbetriebnahme und vorzugsweise in regelmässigen Zeitabständen eine Kalibrierung des optischen Sensors vorgenommen.

Bei einem Verfahren zur Herstellung einer Sensormatrix wird der Lumineszenzindikator, welcher vorzugsweise als ein durch Metallkomplex und Gegenion gebildetes Komplexsalz vorliegt, in einem geeigneten Lösemittel, vorzugsweise in einem hochfluorierten oder perfluorierten Lösemittel, gelöst. Anschliessend wird zu dieser Lösung ein in diesem Lösemittel lösbares Fluoropolymer, beispielsweise in einem Gewichtsanteil von ungefähr 5 Prozent bezogen auf das Gewicht des Lösemittels, zugegeben. Die so hergestellte homogene Lösung des Lumineszenzindikators und des Fluoropolymers wird anschliessend, beispielsweise durch Eingiessen oder Verspachteln, in eine gewünschte Form gebracht. Daraufhin wird durch Verdunstenlassen oder Abdampfen das Lösemittel wieder entfernt und dadurch die Sensormatrix gebildet.

Vorzugsweise wird als Fluoropolymer das unter der Bezeichnung Teflon® AF bekannte Copolymer aus Tetrafluoroethylen und 2,2-Bistrifluoromethyl-4,5-difluoro-1,3-dioxol verwendet. Teflon® AF ist chemisch inert und zeichnet sich durch eine hohe Gaspermeabilität und gute optische Durchlässigkeit vom infraroten bis in den ultravioletten Spektralbereich aus. Bei Raumtemperatur ist Teflon® AF ausschliesslich in gewissen hochfluorierten oder perfluorierten Lösemitteln wie Octafluorotoluol oder Perfluorodecalin lösbar. Teflon® AF ist in verschiedenen Zusammensetzungen erhältlich, wobei Teflon® AF 1600 einen Dioxolgehalt von 65 Mol-Prozent und Teflon® AF 2400 einen Dioxolgehalt von 85 Mol-Prozent aufweist. Zur Herstellung von Sensormatrizes ist Teflon® AF 1600 gegenüber Teflon® AF 2400 aufgrund seiner besseren Lösbarkeit bevorzugt.

2. Bevorzugte Lumineszenzindikatoren

Zur Herstellung von Lumineszenzindikatoren eignet sich insbesondere der folgende Ligand:

(A) 4,7-Dipentafluorobenzyloxy-1,10-phenanthrolin; $C_{26}H_{10}F_{10}N_2O_2$; M = 572.4 g/mol):

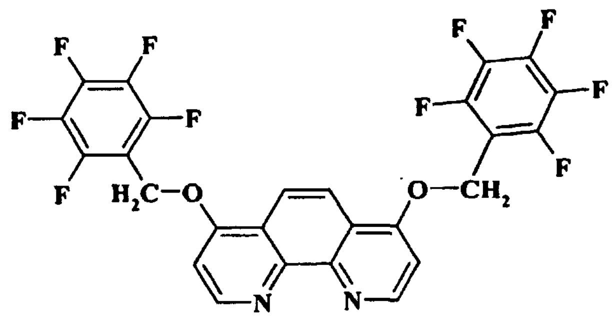

(A)

Weitere Ausführungsbeispiele für fluorierte Liganden sind nachfolgend aufgeführt:

(B) 5-Pentafluorobenzamid-1,10-phenanthrolin; ($C_{19}H_8F_5N_3O$; M = 389.3 g/mol):

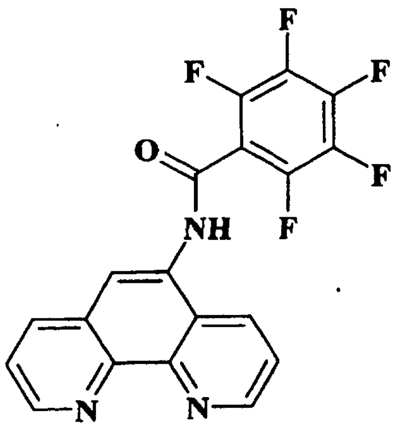

(B)

(C) 4,7-Di-(3,3,4,4,5,5,5-heptafluoropentyl)-1,10-phenanthrolin; ($C_{22}H_{14}F_{14}N_2$; M = 572.34 g/mol):

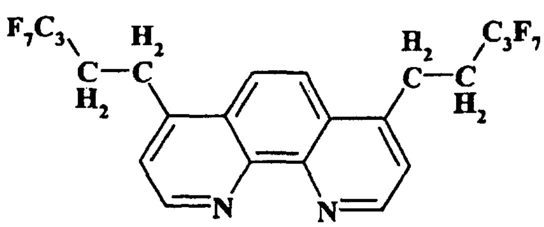

(C)

(D) N,N'-Di-(2,2,3,3,4,4,4-heptafluorobutyl)-1,10-phenanthrolin-4,7-diamid:

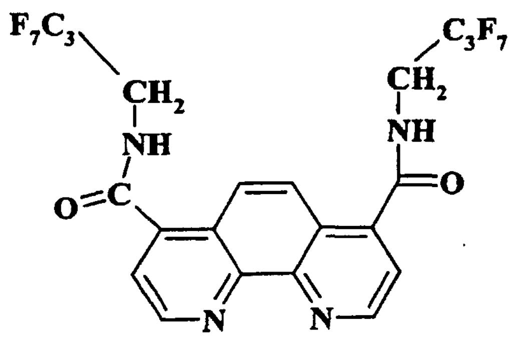

(D)

(E) 4,7-Di-2,2,3,3,4,4,4-heptafluorobutylamino-1,10-phenanthrolin:

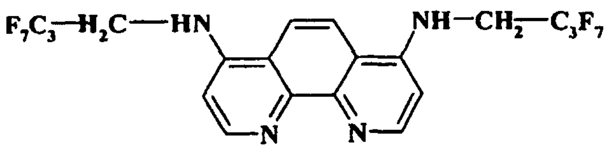

(E)

(F) 4,4'-Di-(3,3,4,4,5,5,5-heptafluoropentyl)-2,2'-bipyridin:

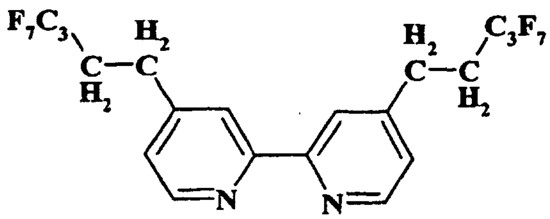

(F)

(G) N,N'-Di-(2,2,3,3,4,4,4-heptafluorobutyl)-4,4'-bipyridin-2,2'-diamid:

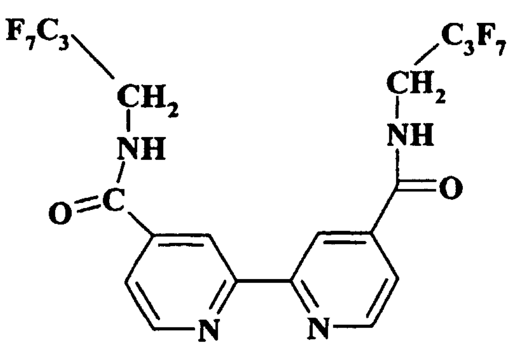

(G)

Die obigen Liganden können mit Ruthenium, Rhenium, Rhodium beziehungsweise Iridium entsprechende Metallkomplexe bilden, die zusammen mit einem geeigneten Gegenion als Komplexsalze isoliert und gelagert werden können. Beispiele bevorzugter Lumineszenzindikatoren sind nachfolgend als Komplexsalze aufgeführt.

(H) Ruthenium(II)-tris-(4,7-dipentafluorobenzyloxy-1,10-phenanthrolin)-diperfluorooctylsulfonat; ($RuC_{94}H_{30}F_{64}N_6O_{12}S_2$; M = 2816.37 g/mol):

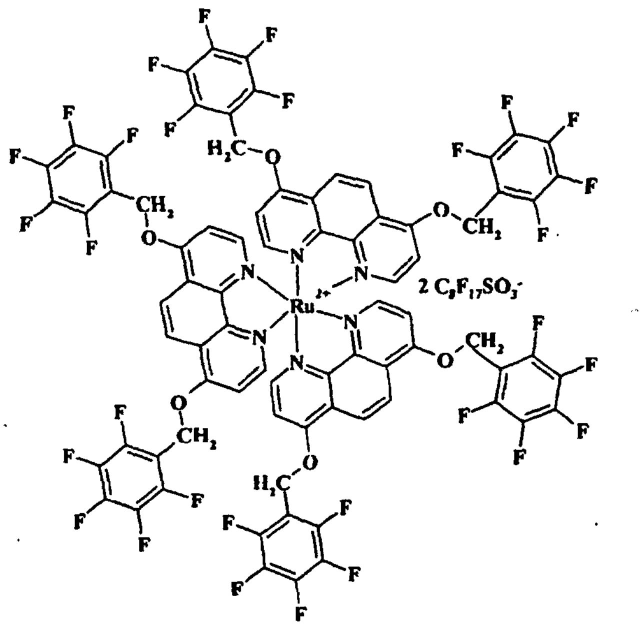

(H)

Der obige Komplex enthält 3 identische Liganden 4,7-Dipentafluorobenzyloxy-1,10-phenanthrolin (nachfolgend: dpfbp). Die nachfolgend aufgeführten Komplexe enthalten anstelle eines bzw. zweier der drei dpfbp-Liganden einen bzw. zwei herkömmliche nicht fluorierte Liganden 4,7-Diphenylphenanthrolin (nachfolgend dpp).

(J) Ruthenium(II)-bis-(4,7-diphenylphenanthrolin)-(4,7-dipentafluorobenzyloxy-1,10-phenanthrolin)-di-perfluorooctylsulfonat; ($RuC_{90}H_{42}F_{44}N_6O_8S_2$;
M = 2336.52 g/mol); nachfolgend: $Ru(dpp)_2(dpfbp)(PFOS)_2$:

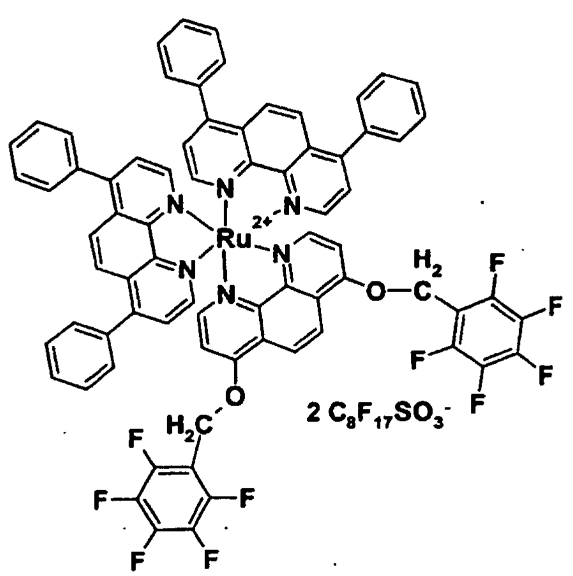

(J)

(K) Ruthenium(II)-bis-(4,7-dipentafluorobenzyloxy-1,10-phenanthrolin)-(4,7-diphenylphenanthrolin)-di-perfluorooctylsulfonat; ($RuC_{96}H_{26}F_{54}N_6O_{10}S_2$;
M = 2576.4 g/mol); nachfolgend: $Ru(dpp)(dpfbp)_2(PFOS)_2$:

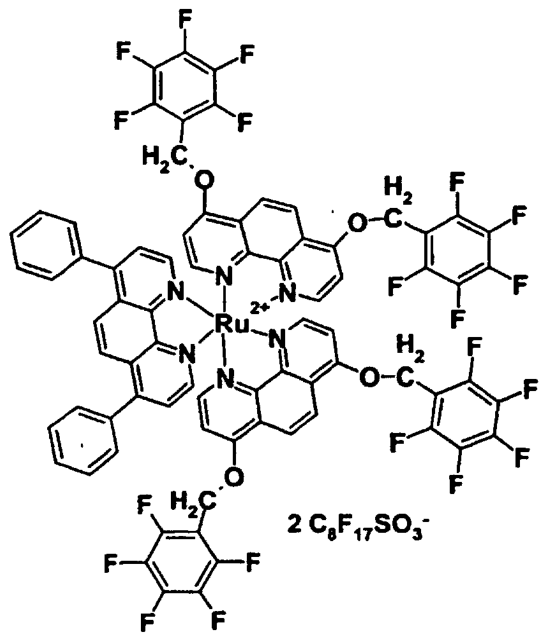

(K)

Anstelle des in den obigen Lumineszenzindikatoren enthaltenen Perfluorooctylsulfonat-Anions (nachfolgend PFOS) kann als Gegenion ein Borat-Anion verwendet werden, wobei im folgenden Natriumsalze von besonders bevorzugten Gegenionen aufgeführt sind:

(L) Natrium-tetrakis-[3,5-bis-(1,1,1,3,3,3-hexafluor-2-methoxy-2-propyl)-phenyl]-borat Trihydrat; ($C_{56}H_{36}BF_{48}O_8Na \cdot 3H_2O$; M = 1836.67 g/mol):

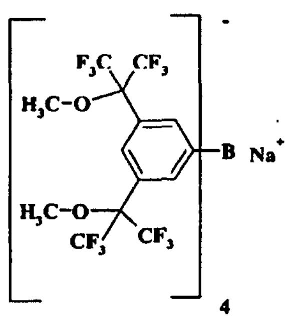

(L)

(M) Natrium-tetrakis-[3,5-bis-(trifluormethyl)-phenyl]-borat;
($C_{32}H_{12}BF_{24}Na$; M = 886.2 g/mol):

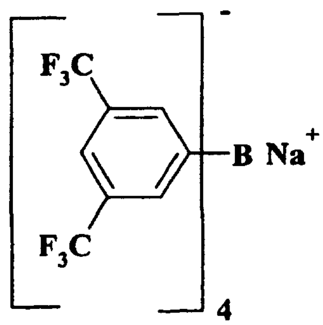

(M)

Die obigen Anionen, insbesondere (L), zeichnen sich zum einen durch eine erhebliche Sperrigkeit aus, welche bewirkt, dass die Diffusion des Lumineszenzfarbstoffes in der Sensormatrix infolge einer sterischen Behinderung stark eingeschränkt ist. Dementsprechend ist eine unerwünschte Aggregation des Lumineszenzindikator oder dessen Austreten aus der Sensormatrix wesentlich erschwert. Zum anderen wird durch die zumindest teilweise Fluorierung dieser Gegenionen die Lösbarkeit des entsprechenden Lumineszenzindikators in hochgradig fluorierten oder perfluorierten Fluoropolymeren erhöht.

Eine im Vergleich zu (L) und (M) kostengünstigere Alternative stellt das nachfolgend als Kaliumsalz aufgeführte chlorhaltige Borat-Anion dar:

(N) Kalium-tetrakis-(4-chlorphenyl)-borat; ($C_{24}H_{16}BCl_4K$; M = 496.12 g/mol):

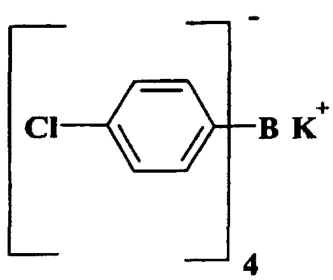

(N)

In Abhängigkeit des verwendeten Metallkomplexes und des die Sensormatrix bildenden Fluoropolymers ist in Vorversuchen zu prüfen, ob das Anion gemäss (N) trotz fehlender Fluorierung eine für die jeweilige Anwendung genügende Lösbarkeit und Stabilität des Lumineszenzindikators in der Sensormatrix ergibt, oder ob eines der fluorierten Anionen wie (L) oder (M) zu bevorzugen ist.

3. Synthesen

Zur Herstellung der Lumineszenzindikatoren werden herkömmliche Syntheseverfahren eingesetzt. Als Beispiel für die Herstellung eines bevorzugten Lumineszenzindikators ist nachfolgend die Synthese von $Ru(dpp)_2(dpfbp)(PFOS)_2$ angegeben.

3.1. Synthese von 4,7-Dipentafluorobenzyloxy-1,10-phenanthrolin (dpfbp)

In einem mit Rückflusskühler ausgestatteten 100-ml-Kolben wurde 4,7-Dihydroxy-1,10-phenanthrolin (0.2g, 0.94 mmol) in 10 ml N,N-Dimethylformamid gelöst. Danach wurde Natriumhydrid (0.12 g, 60% in Öl, 3 mmol) zugesetzt, welches zuvor zwecks Entfernung des Öls 4 mal mit Petrolether gewaschen worden war. Die so gebildete Aufschlämmung wurde während 30 Minuten bei 25°C gerührt, und anschliessend wurde Pentafluorobenzylbromid (624 mg, 2.39 mmol) zugegeben. Die Temperatur wurde auf 60°C erhöht und während 3 Stunden gehalten. Anschliessend wurde die abgekühlte Reaktionsmischung in 100 ml Wasser gegeben und eine Extraktion mit 3 mal 80 ml Dichlormethan vorgenommen. Die kombinierten organischen Phasen wurden mit Natriumsulfat getrocknet, am Vakuum aufkonzentriert und in einer (1:1)-Mischung von Dichlormethan-Diethylether umkristallisiert. Die Ausbeute betrug 85 mg (0.15

mmol, 15.8%) 4,7-Dipentafluorobenzyloxy-1,10-phenanthrolin als leicht gefärbter Festkörper; die Charakterisierung durch $^1$H-NMR in $CD_2Cl_2$ ergab folgende Signale: $\delta$ = 8.99 (d, J=5.3 Hz, 2 H, aromatisch), 8.07 (s, 2H, aromatisch), 7.17 (d, J=5.3 Hz, 2H, aromatisch), 5.43 (s, 4H, Ph-$CH_2$-O).

3.2. Synthese von $Ru(dpp)_2Cl_2$

$RuCl_3 \cdot H_2O$ (62.4 mg, 0.3 mmol) wurde in einer Mischung aus 2 ml Ethylenglykol und 0.2 ml Wasser bei 120°C gelöst. Danach wurden 200 mg (0.6 mmol) 4,7-Diphenyl-1,10-phenanthrolin zugesetzt. Die so erhaltene Mischung wurde in einem Gefäss mit Rückflusskühler auf 160°C erhitzt und während 45 Minuten bei dieser Temperatur gehalten. Nach dem Abkühlen wurde die Lösung in 5 ml Ethanol gelöst, filtriert und mit Ethanol verdünnt. Das so gewonnene Filtrat enthält $Ru(dpp)_2Cl_2$ und $Ru(dpp)_3Cl_2$ als Rohgemisch. Letzteres wurde mittels Säulenchromatographie aufgetrennt, wobei als stationäre Phase neutrales Aluminiumoxid verwendet wurde. Das gewünschte Zwischenprodukt Ru $(dpp)_2Cl_2$ wurde durch Verwendung von Aceton als mobile Phase gewonnen, wogegen $Ru(dpp)_3Cl_2$ mittels Ethanol eluiert wurde.

3.3. Synthese von $Ru(dpp)_2(dpfbp)(PFOS)_2$

20 mg (0.024 mmol) $Ru(dpp)_2Cl_2$ und 16.4 mg (0.029 mmol) 4,7-Dipentafluorobenzyloxy-1,10-phenanthrolin (dpfbp) wurden in einer Mischung aus 1 ml Ethylenglykol und 0.1 ml Wasser gelöst und während 2 Stunden unter Rückfluss erhitzt. Nach dem Abkühlen wurde die Lösung in 2 ml Ethanol gelöst und filtriert. Das so gewonnene Filtrat enthält rohes $Ru(dpp)_2(dpfbp)Cl_2$.

Der Ersatz des Chloridions durch das gewünschte perfluorierte Gegenion wurde durch langsames tropfenweises Zusetzen des rohen $Ru(dpp)_2(dpfbp)Cl_2$.zu 10 ml einer 1 mM wässrigen Lösung von Perfluorooctylsulfonsäure erreicht, wobei ein feinverteilter orangefarbiger Niederschlag gewonnen wurde. Dieser wurde filtriert und 4 mal mit destilliertem Wasser gewaschen, wodurch der Lumineszenzfarbstoff als rotes kristallines Pulver in einer Ausbeute von 45% (25 mg, 0.01 mmol) erhalten wurde. Die Reinheit wurde durch Massenspektroskopie und Dünnschichtchromatographie bestätigt.

4. Ausführungsbeispiele

Die oben beschriebenen Lumineszenzindikatoren $Ru(dpp)_2(dpfbp)(PFOS)_2$ beziehungsweise $Ru(dpp)(dpfbp)_2(PFOS)_2$ wurden in Octafluorotoluol gelöst, und danach wurde durch Zugabe von Teflon® AF 1600 eine Lösung mit einem Volumenanteil von ungefähr 5% Teflon gebildet. Die verwendeten Mengenverhältnisse sind in der Tabelle 1 angegeben. Die so erhaltenen Mischungen wurden auf eine Polyesterfolie aufgetragen, wobei mittels einer Metallklinge eine Schicht mit einer Dicke von 250 µm oder 125 µm gebildet wurde, was nach Abdampfen des Lösemittels folienartige Sensormatrizes mit einer Schichtdicke von 6 µm beziehungsweise 12 µm ergab. Die Sensormatrizes wiesen eine leichte Orangefärbung auf.

Tabelle 1:

| Zusammensetzung der Sensormatrizes M1 und M2 | | | |
|---|---|---|---|
| Matrix | Lumineszenzindikator | | Milligramm Indikator pro Gramm Teflon |
| M1 | (J) | $Ru(dpp)_2(dpfbp)(PFOS)_2$ | 2 |
| M2 | (K) | $Ru(dpp)(dpfbp)_2(PFOS)_2$ | 2 |

Zur Charakterisierung der Sensormatrizes wurden diese in eine thermostatisierte Durchflusszelle eingebracht und dort mit sinusförmig moduliertem Anregungslicht einer Wellenlänge von 470 nm und einer Modulationsfrequenz von 45 kHz bestrahlt. Die von der Sensormatrix ausgestrahlte Lumineszenzstrahlung wurde in an sich bekannter Weise phasenempfindlich nachgewiesen. Die durchschnittliche Abklingzeit $\tau$ der Lumineszenzstrahlung wurde nach folgender Gleichung berechnet

$$\tau = \frac{\tan \Phi}{2\pi \cdot f} \qquad (2)$$

worin f die Modulationsfrequenz des Anregungslichtes und $\Phi$ der Phasenunterschied zwischen Anregungs- und Lumineszenzstrahlung ist. Die so gemessene Abklingzeit $\tau$ stellt das Ergebnis einer Mittelung über sämtliche lumineszierenden Spezies dar.

Zur Charakterisierung der Sensormatrizes in einem gasförmigen Messmedium wurden die hergestellten Folien einer Gasatmosphäre definierten Sauerstoffgehaltes ausgesetzt, wobei einerseits trockene und andererseits wasserdampfhaltige Sauerstoff/Stickstoffmischungen verwendet wurden. Sämtliche Messungen erfolgten bei einer Temperatur von 22°C. Die Figuren 3 und 4 zeigen das zeitliche Ansprechverhalten des Phasenwinkels Φ unter wiederholten stufenartigen Verringerungen und Erhöhungen des Sauerstoffgehaltes in einem trockenen gasförmigen Messmedium. Die Messergebnisse belegen eine schnelle Ansprechzeit sowie eine gute Reproduzierbarkeit.

Zur Ermittlung von Stern-Volmer-Kurven wurde in an sich bekannter Weise die relative Lumineszenzintensität $F_o/F$ beziehungsweise das Verhältnis der Abklingzeiten $\tau_o/\tau$ als Funktion des Sauerstoffpartialdruckes $p(O_2)$, welcher der Konzentration des Analyten [Q] gemäss Glg. (1) entspricht, aufgetragen. Die gemessenen Stern-Volmer-Kurven zeigten wie bei anderen bekannten optischen Sensoren eine gewisse Abweichung vom idealen Verhalten, weshalb zur weiteren Auswertung die folgenden drei Ansätze miteinander verglichen wurden:

(a) der lineare Ansatz gemäss:

$$\frac{\tau_0}{\tau} = 1 + K \cdot p(O_2) \qquad (3)$$

welcher dem idealen Verhalten nach Stem-Volmer entspricht;

(b) der Ansatz von Carraway gemäss:

$$\frac{\tau_0}{\tau} = \left( \frac{f_1}{1 + K_1 \cdot p(O_2)} + \frac{f_2}{1 + K_2 \cdot p(O_2)} \right)^{-1} \qquad (4)$$

welcher auf der Annahme beruht, dass der Lumineszenzindikator in der Sensormatrix zwei unterschiedliche Einbaulagen mit unterschiedlichen Löschkonstanten $K_1$ und $K_2$ besetzt, wobei die relative Besetzung der Einbaulagen durch die Wichtungsfaktoren $f_1$ und $f_2$ definiert ist; und

(c) ein vereinfachter Carraway-Ansatz gemäss:

$$\frac{\tau_0}{\tau} = \left( \frac{f_1}{1 + K_1 \cdot p(O_2)} + f_2 \right)^{-1} \qquad (5)$$

gemäss welchem die Lumineszenz des Indikators in der zweiten Einbaulage nicht löschbar ist ($K_2 = 0$).

Zusätzlich zur Auswertung der Messdaten gemäss den Gleichungen (3) bis (5) wurde eine weitere Auswertung durchgeführt, bei der anstelle des Verhältnisses der Abklingzeiten $\tau_o/\tau$ die relative Lumineszenzintensität $F_o/F$ eingesetzt wurde. Die entsprechenden Auswertungsergebnisse sind in der Tabelle 2 wiedergegeben.

Tabelle 2:

| Löschkonstanten und Wichtungsfaktoren der Sensormatrizes M1 und M2 | | | | | | |
|---|---|---|---|---|---|---|
| Sensormatrix | Messgrösse | $K_1$ | $K_2$ | $f_1$ | $f_2$ | $R^2$ |
| M1 (via Gl. 3) | Abklingzeit | 0.0075 | --- | 1 | --- | 0.7345 |
| | Intensität | 0.0118 | --- | 1 | --- | 0.8723 |
| M1 (via Gl. 4) | Abklingzeit | 0.0528 | 0.0008 | 0.701 | 0.299 | 0.9997 |
| | Intensität | 0.0494 | 0.0012 | 0.790 | 0.210 | 0.9998 |

Tabelle 2: (fortgesetzt)

| Löschkonstanten und Wichtungsfaktoren der Sensormatrizes M1 und M2 | | | | | | |
|---|---|---|---|---|---|---|
| Sensormatrix | Messgrösse | $K_1$ | $K_2$ | $f_1$ | $f_2$ | $R^2$ |
| M1 (via Gl. 5) | Abklingzeit | 0.0339 | --- | 0.799 | 0.201 | 0.9933 |
| | Intensität | 0.0324 | --- | 0.889 | 0.111 | 0.9961 |
| M2 (via Gl. 3) | Abklingzeit | 0.0068 | --- | 1 | --- | 0.7306 |
| | Intensität | 0.0085 | --- | 1 | --- | 0.7895 |
| M2 (via Gl. 4) | Abklingzeit | 0.0467 | 0.0007 | 0.695 | 0.305 | 0.9997 |
| | Intensität | 0.0502 | 0.0009 | 0.728 | 0.272 | 0.9997 |
| M2 (via Gl. 5) | Abklingzeit | 0.0318 | --- | 0.783 | 0.217 | 0.9949 |
| | Intensität | 0.0320 | --- | 0.830 | 0.170 | 0.9943 |

Aus den Ausgleichsrechnungen ergibt sich, dass der lineare Stern-Volmer-Ansatz nach Gleichung (3) die Ergebnisse nur unzureichend beschreibt, weicht doch der Korrelationskoeffizient deutlich von 1 ab ($R^2$<0.90). Die beste Beschreibung wurde mit dem Carraway-Ansatz nach Gleichung (4) erzielt ($R^2$>0.999), aber auch mit dem vereinfachten Carraway-Ansatz nach Gleichung (5) wurde eine gute Wiedergabe der experimentellen Daten erreicht ($R^2$>0.99). Dementsprechend kann das Verhalten der Sensormembranen unter verschiedenen äusseren Bedingungen zweckmässigerweise anhand der gemäss Gleichungen (4) oder (5) berechneten Koeffizienten beurteilt werden.

4.1 Einfluss von Feuchtigkeit

Ein Vergleich der Messergebnisse an einer trockenen Stickstoff/Sauerstoffmischung und an einer bei der Messtemperatur von 22°C wasserdampfgesättigten Stickstoff/Sauerstoffmischung ergab nur geringfügige Abweichungen von 6% bis 8% in den entsprechenden Löschkonstanten $K_1$ und $K_2$. Dieses vorteilhafte Verhalten wird auf die hydrophoben Eigenschaften des Matrixmaterials zurückgeführt, welche ein Eindringen von Wasser in die Sensormatrix weitgehend verhindern. Dementsprechend ist eine Kalibrierung des optischen Sensors in der Gasphase auch für einen nachfolgenden Einsatz mit wässrigen Messmedien geeignet.

4.2 Sterilisierbarkeit der Sensormatrizes M1 und M2

Für Anwendungen im Zusammenhang mit biologischen Zellkulturen oder in der medizinischen Forschung ist eine Sterilisierbarkeit der optischen Sensoren unumgänglich, um eine Kontamination der auszumessenden Proben zu vermeiden. Im vorliegenden Fall wurden die Sensormatrizes M1 und M2 hinsichtlich der beiden folgenden Reinigungs- bzw. Sterilisierungsmethoden untersucht:

a) Autoklavierung: Behandlung mit übersättigtem Wasserdampf bei 130°C und 1.5-fachem Atmosphärendruck während 1 Stunde;

b) Alkalibehandlung (sogenanntes "Cleaning-in-Place" (CIP)): Kontakt mit einer wässrigen NaOH-Lösung (5%) bei 90°C während 15 Minuten.

Es wurde gefunden, dass die Sensormatrizes M1 und M2 auch nach 10 Zyklen einer der obigen Sterilisierungsmethoden funktionsfähig blieben und insbesondere keine Einbusse der Nachweisempfindlichkeit auftrat. Ausserdem fand kein Auskristallisieren des Lumineszenzindikators statt. Allerdings wurde festgestellt, dass unter Umständen ein Ablösen der Sensormatrix von der verwendeten Polyesterunterlage stattfinden kann. Dieses Problem liess sich durch ein vorgängiges Aufrauhen der Kontaktfläche der Polyesterunterlage vermeiden. Desweiteren wurden nach Durchführung der Sterilisierung teilweise erhebliche Unterschiede in den Kalibrierungskurven festgestellt. Dementsprechend erscheint es erforderlich, nach der Sterilisierung des Sensors jeweils eine Neukalibrierung vorzunehmen.

Insgesamt zeichnen sich die untersuchten Sensormatrizes durch eine hohe Nachweisempfindlichkeit, eine schnelle Ansprechzeit, eine gute Beständigkeit gegenüber Lösemitteln, eine erhebliche mechanische Stabilität sowie eine hervorragende Sterilisierbarkeit aus.

Bezugszeichenliste

| | |
|---|---|
| 2 | Sensormatrix |
| 4 | Lumineszenzindikator |
| 6 | Eingestrahltes Licht |
| 8 | Lumineszenzstrahlung |
| 10 | Schutzschicht |
| 12 | Messmedium |
| 14 | Gehäuse |
| 16 | Glasstab |
| 18 | Endfläche von 16 |
| 20 | Stimfläche von 14 |
| 22 | Sensormatrix |
| 24 | Deckfolie |
| 26 | Überwurfhülse |
| 28 | Lichtwellenleiter |

## Patentansprüche

**1.** Optischer Sensor zur Bestimmung eines Analyten, insbesondere von Sauerstoff, mit einer im wesentlichen aus einem Fluoropolymer gebildeten Sensormatrix (2; 22), die einen Lumineszenzindikator (4) enthält, **dadurch gekennzeichnet, dass** der Lumineszenzindikator (4) einen Metallkomplex von Ruthenium, Rhenium, Rhodium oder Iridium und mindestens einem mindestens teilweise fluorierten Liganden enthält.

**2.** Optischer Sensor nach Anspruch 1, **dadurch gekennzeichnet, dass** die Sensormatrix (2; 22) aus einem bei Raumtemperatur im wesentlichen ausschliesslich in hochfluorierten oder perfluorierten Lösemitteln lösbaren Fluoropolymer, vorzugsweise aus einem Polytetrafluoroethylen-Derivat, gebildet ist.

**3.** Optischer Sensor nach Anspruch 1, **dadurch gekennzeichnet, dass** das Fluoropolymer ein aus Tetrafluoroethylen und 2,2-Bistrifluoromethyl-4,5-difluoro-1,3-dioxol gebildetes Copolymer ist.

**4.** Optischer Sensor nach Anspruch 1, **dadurch gekennzeichnet, dass** der Ligand ein substituiertes Polypyridin ist, welches mindestens einen mindestens teilweise fluorierten Substituenten aufweist.

**5.** Optischer Sensor nach Anspruch 4, **dadurch gekennzeichnet, dass** der Ligand ein substituiertes 1,10-Phenanthrolin-Derivat oder ein substituiertes Bipyridin ist.

**6.** Optischer Sensor nach Anspruch 4, **dadurch gekennzeichnet, dass** der Ligand ein 4,7-Dipentafluorobenzyloxy-1,10-phenanthrolin ist.

**7.** Optischer Sensor nach Anspruch 4, **dadurch gekennzeichnet, dass** der Ligand ein 5-Pentafluorobenzamid-1,10-phenanthrolin oder ein 4,7-Di-(3,3,4,4,5,5,5-heptafluoropentyl)-1,10-phenanthrolin oder ein N,N'-Di-(2,2,3,3,4,4,4-heptafluorobutyl)-1,10-phenanthrolin-4,7-diamid oder ein 4,7-Di-2,2,3,3,4,4,4-heptafluorobutylamino-1,10-phenanthrolin oder ein 4,4'-Di-(3,3,4,4,5,5,5-heptafluoropentyl)-2,2'bipyridin oder ein N,N'-Di-(2,2,3,3,4,4,4-heptafluorobutyl)-4,4'-bipyridin-2,2'-diamid ist.

**8.** Optischer Sensor nach Anspruch 1, **dadurch gekennzeichnet, dass** der Metallkomplex ein Ruthenium(II)-tris-(4,7-dipentafluorobenzyloxy-1,10-phenanthrolin) ist.

**9.** Optischer Sensor nach Anspruch 1, **dadurch gekennzeichnet, dass** der Metallkomplex ein Ruthenium(II)-bis-(4,7-dipentafluorobenzyloxy-1,10-phenanthrolin)-(4,7-diphenylphenanthrolin) ist.

**10.** Optischer Sensor nach Anspruch 1, **dadurch gekennzeichnet, dass** der Metallkomplex ein Ruthenium(II)-bis-(4,7-diphenylphenanthrolin)-(4,7-dipentafluorobenzyloxy-1,10-phenanthrolin) ist.

**11.** Optischer Sensor nach Anspruch 1, **dadurch gekennzeichnet, dass** der Lumineszenzindikator ein mindestens teilweise fluoriertes Gegenion enthält.

**12.** Optischer Sensor nach Anspruch 11, **dadurch gekennzeichnet, dass** das Gegenion dazu geeignet ist, eine sterische Behinderung herbeizuführen.

**13.** Optischer Sensor nach Anspruch 1, **dadurch gekennzeichnet, dass** die Sensormatrix (22) folienartig ausgebildet ist.

**14.** Optischer Sensor nach Anspruch 1, **dadurch gekennzeichnet, dass** die Sensor-matrix (2) mit einer Schutzschicht (10, 24) versehen ist, welche im wesentlichen aus demselben Fluoropolymer wie die Sensormatrix besteht, wobei die Schutzschicht im wesentlichen keinen Lumineszenzindikator (4) enthält.

**15.** Verfahren zur Herstellung des Sensors nach einem der Ansprüche 1 bis 14, wobei man eine erste Menge des Lumineszenzindikators und eine zweite Menge des Fluoropolymers in einem Lösemittel löst und danach durch Abdampfen des Lösemittels die Sensormatrix bildet.

**16.** Verfahren nach Anspruch 15, **dadurch gekennzeichnet, dass** das Lösemittel ein hochfluoriertes oder perfluoriertes Lösemittel ist.

**17.** Verfahren zur Bestimmung eines Analyten in einem Messmedium, **dadurch gekennzeichnet, dass** man den Sensor nach einem der Ansprüche 1 bis 14 in Kontakt mit dem Messmedium bringt und eine durch eine Wechselwirkung mit dem Analyten hervorgerufene Änderung einer optischen Eigenschaft des Lumineszenzindikators ermittelt.

**18.** Verwendung des Sensors nach einem der Ansprüche 1 bis 14 zur Bestimmung von Sauerstoff in einem flüssigen oder gasförmigen Messmedium.

## Claims

**1.** An optical sensor for the determination of an analyte, in particular of oxygen, with a sensor matrix (2; 22) formed essentially of a fluoropolymer, which sensor matrix contains a luminescent indicator (4) **characterised in that** the luminescent indicator (4) contains a metal complex of ruthenium, rhenium, rhodium or iridium and at least one at least partly fluorinated ligand.

**2.** The optical sensor according to claim 1, **characterised in that** the sensor matrix (2; 22) is formed of a fluoropolymer which, at room temperature, is essentially soluble exclusively in highly fluorinated or perfluorinated solvents, preferably of a polytetrafluoroethylene derivative.

**3.** The optical sensor according to claim 1, **characterised in that** the fluoropolymer is a copolymer formed of tetrafluoroethylene and 2,2-bistrifluoromethyl-4,5-difluoro-1,3-dioxol.

**4.** The optical sensor according to claim 1, **characterised in that** the ligand is a substituted polypyridine which exhibits at least one at least partly fluorinated substituent.

**5.** The optical sensor according to claim 4, **characterised in that** the ligand is a substituted 1,10-phenanthroline derivative or a substituted bipyridine.

**6.** The optical sensor according to claim 4, **characterised in that** the ligand is a 4,7-dipentafluorobenzyloxy-1,10-phenanthroline.

**7.** The optical sensor according to claim 4, **characterised in that** the ligand is a 5-pentafluorobenzamide-1,10-phenanthroline or a 4,7-di-(3,3,4,4,5,5,5-heptafluoro-pentyl)-1,10-phenanthroline or a N,N'-di-(2,2,3,3,4,4,4-heptafluorobutyl)-1,10-phenanthroline-4,7-diamide or a 4,7-di-2,2,3,3,4,4,4-heptafluorobutylamino-1,10-phenanthroline or a 4,4'-di-(3,3,4,4,5,5,5-heptafluoropentyl)-2,2'-bipyridine or a N,N'-di-(2,2,3,3,4,4,4-heptafluorobutyl)-4,4'-bipyridine-2,2'-diamide.

**8.** The optical sensor according to claim 1, **characterised in that** the metal complex is a ruthenium(II)-tris-(4,7-dipentafluorobenzyl-oxy-1,10-phenanthroline).

**9.** The optical sensor according to claim 1, **characterised in that** the metal complex is a ruthenium(II)-bis-(4,7-dipentafluorobenzyloxy-1,10-phenanthroline)-(4,7-diphenylphenanthroline).

**10.** The optical sensor according to claim 1, **characterised in that** the metal complex is a ruthenium(II)-bis-(4,7-diphenylphenanthroline)-(4,7-dipentafluorobenzyloxy-1,10-phenanthroline.

**11.** The optical sensor according to claim 1, **characterised in that** the luminescent indicator contains an at least partly fluorinated counter-ion.

**12.** The optical sensor according to claim 11, **characterised in that** the counter-ion is suitable for bringing about a steric hindrance.

**13.** The optical sensor according to claim 1, **characterised in that** the sensor matrix (22) is formed in the form of a film.

**14.** The optical sensor according to claim 1, **characterised in that** the sensor matrix (2) is provided with a protective layer (10, 24) which consists essentially of the same fluoropolymer as the sensor matrix, the protective layer containing essentially no luminescent indicator (4).

**15.** A process for the manufacture of the sensor according to one of claims 1 to 14, a first quantity of the luminescent indicator and a second quantity of the fluoropolymer being dissolved in a solvent and the sensor matrix being subsequently formed by evaporating the solvent.

**16.** The process according to claim 15, **characterised in that** the solvent is a highly fluorinated or perfluorinated solvent.

**17.** A process for the determination of an analyte in a measuring medium **characterised in that** the sensor according to one of claims 1 to 14 is brought into contact with the measuring medium and a change in an optical property of the luminescent indicator brought about by an interaction with the analyte is determined.

**18.** A use of the sensor according to one of claims 1 to 14 for the determination of oxygen in a liquid or gaseous measuring medium.

**Revendications**

**1.** Capteur optique pour la détection d'un analyte, en particulier de l'oxygène, avec une matrice essentiellement composée d'un fluoropolymère (2 ; 22), qui contient une indicateur de luminescence (4), **caractérisé en ce que** l'indicateur de luminescence (4) contient un complexe métallique de ruthénium, de rhénium, de rhodium ou d'iridium et au moins un ligand au moins en partie fluoré.

**2.** Capteur optique selon la revendication 1, **caractérisé en ce que** la matrice du capteur (2 ; 22) est composée d'un fluoropolymère soluble à température ambiante exclusivement dans des solvants essentiellement hautement fluorés ou perfluorés, de préférence d'un dérivé de polytetrafluoroéthylène.

**3.** Capteur optique selon la revendication 1 **caractérisé en ce que** le fluoropolymère est un copolymère composé de tetrafluoroéthylène et de 2,2-bistrifluorométhyl-4,5-difluoro-1,3-dioxol.

**4.** Capteur optique selon la revendication 1 **caractérisé en ce que** le ligand est une polypyridine substituée, laquelle présente au moins un substituant au moins en partie fluoré.

**5.** Capteur optique selon la revendication 4, **caractérisé en ce que** le ligand est un dérivé substitué de 1,10-phénanthroline ou une bipyridine substituée.

**6.** Capteur optique selon la revendication 4, **caractérisé en ce que** le ligand est une 4,7-dipentafluorobenzyloxy-1,10-phénanthroline.

**7.** Capteur optique selon la revendication 4, **caractérisé en ce que** le ligand est une 5-pentafluorobenzamide-1,10-phénanthroline ou une 4,7-di-(3,3,4,4,5,5,5-heptafluoropentyl)-1,10-phénanthroline ou un N,N'-di-(2,2,3,3,4,4,4-heptafluorobutyl)-1,10-phénanthroline-4,7-diamide ou une 4,7-di-2,2,3,3,4,4,4-heptafluorobutylamino-1,10-phénanthroline ou une 4,4'-di-(3,3,4,4,5,5,5-heptafluoropentyl)-2,2'-bipyridine ou un N, N'-(2,2,3,3,4,4,4-heptafluorobutyl)-4,4'-bipyridine-2,2'-diamide.

**8.** Capteur optique selon la revendication 1, **caractérisé en ce que** le complexe métallique est une ruthénium(II)-tris-(4,7-dipentafluorobenzyloxy-1,10-phénanthroline).

**9.** Capteur optique selon la revendication 1, **caractérisé en ce que** le complexe métallique est une ruthénium(II)-bis-(4,7-dipentafluorobenzyloxy-1,10-phénanthroline)-(4,7-diphénylphénanthroline).

**10.** Capteur optique selon la revendication 1, **caractérisé en ce que** le complexe métallique est une ruthénium(II)-bis-(4,7-diphénylphénanthroline)-(4,7-dipentafluorobenzyloxy-1,10-phénanthroline).

**11.** Capteur optique selon la revendication 1, **caractérisé en ce que** l'indicateur de luminescence contient au moins un contre-ion au moins en partie fluoré.

**12.** Capteur optique selon la revendication 11, **caractérisé en ce que** le contre-ion est approprié pour provoquer un encombrement stérique.

**13.** Capteur optique selon la revendication 1, **caractérisé en ce que** la matrice du capteur (22) est constituée sous forme de film.

**14.** Capteur optique selon la revendication 1, **caractérisé en ce que** la matrice du capteur (2) est pourvue d'une couche de protection (10, 24), laquelle est essentiellement composée du même fluoropolymère que la matrice du capteur, cependant que la couche de protection ne contient essentiellement aucun indicateur de luminescence (4).

**15.** Procédé pour la fabrication du capteur selon l'une quelconque des revendications 1 à 14, dans lequel on dissout une première quantité de l'indicateur de luminescence et une deuxième quantité du fluoropolymère dans un solvant et qui forme ensuite par évaporation du solvant la matrice du capteur.

**16.** Procédé selon la revendication 15, **caractérisé en ce que** le solvant est un solvant extrêmement fluoré ou perfluoré.

**17.** Procédé pour la détection d'un analyte dans un milieu de mesure **caractérisé en ce que** l'on met en contact le capteur selon l'une quelconque des revendications 1 à 14 avec le milieu de mesure et **en ce que** l'on détermine une modification d'une propriété optique de l'indicateur de luminescence provoquée par une interaction avec l'analyte.

**18.** Utilisation du capteur selon l'une quelconque des revendications 1 à 14 pour détecter l'oxygène dans un milieu de mesure liquide ou gazeux.

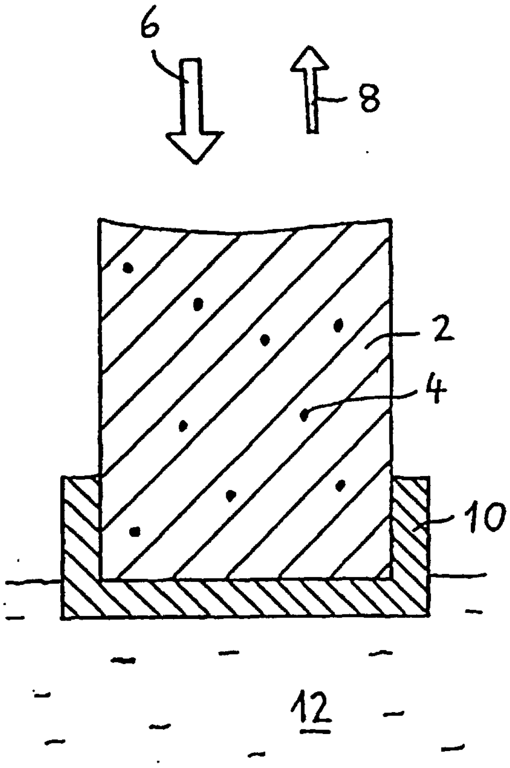


Fig. 1

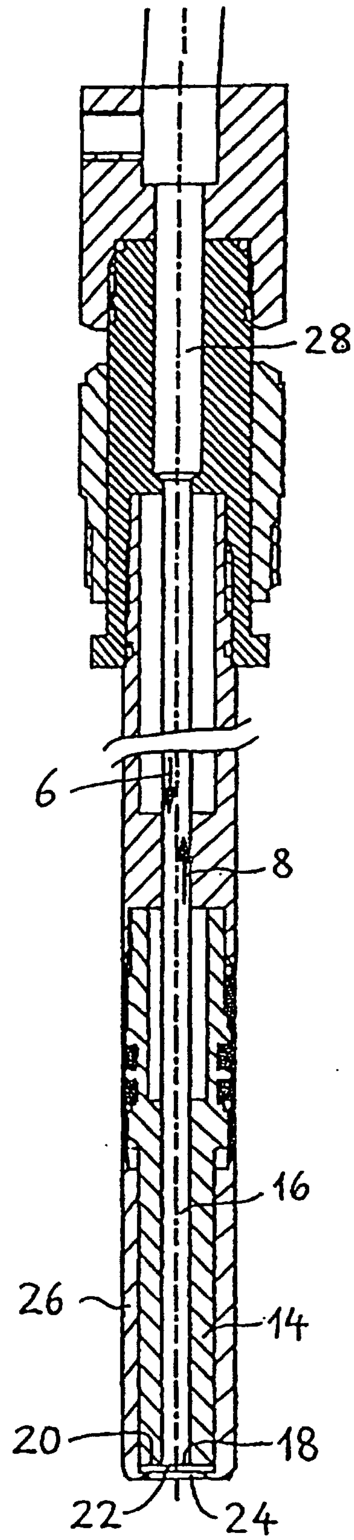


Fig. 2

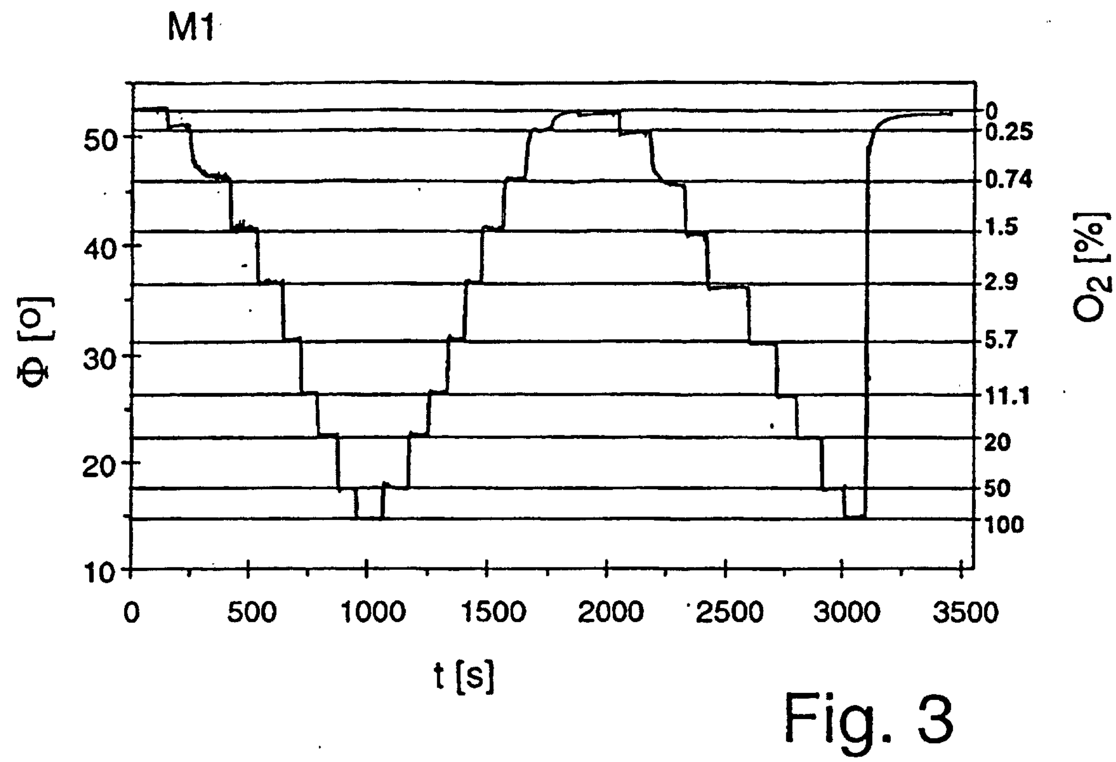
M1
50
40
30
20
10
Φ [o]
0
0.25
0.74
1.5
2.9
5.7
11.1
20
50
100
O2 [%]
0
500
1000
1500
2000
2500
3000
3500
t [s]

Fig. 3

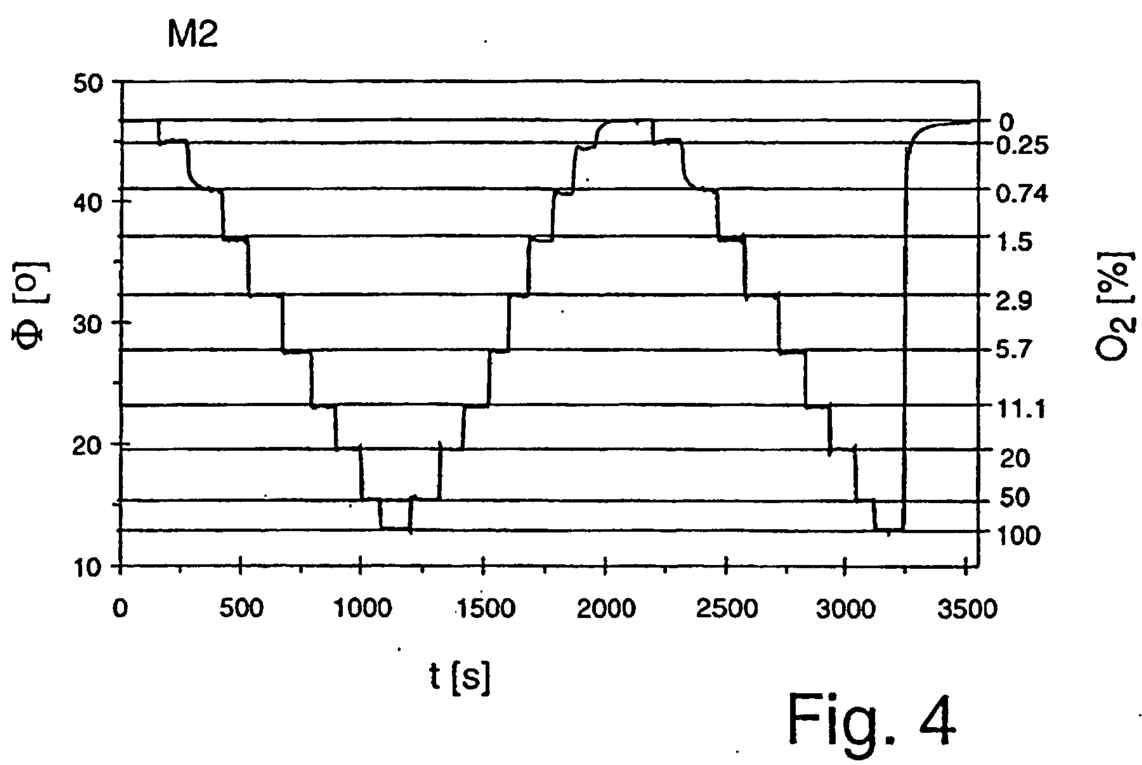
M2
50
40
30
20
10
Φ [o]
0
0.25
0.74
1.5
2.9
5.7
11.1
20
50
100
O2 [%]
0
500
1000
1500
2000
2500
3000
3500
t [s]

Fig. 4